# EUROPEAN PATENT SPECIFICATION

(11) **EP 3 032 798 B1**
(45) Date of publication and mention of the grant of the patent: **14.03.2018**
(21) Application number: 15197877.2
(22) Date of filing: 03.12.2015
(51) Int. Cl.: H04L 12/26, H04L 29/06

(54) **PROCESSING METHOD AND APPARATUS FOR PREVENTING PACKET ATTACK**
VERARBEITUNGSVERFAHREN UND VORRICHTUNG ZUR VERHINDERUNG VON PAKETANGRIFFEN
PROCÉDÉ ET APPAREIL DE TRAITEMENT POUR EMPÊCHER UNE ATTAQUE PAR PAQUETS

(30) Priority: 08.12.2014 CN 201410746239
(43) Date of publication of application: 15.06.2016
(73) Proprietor: Huawei Technologies Co., Ltd., Longgang District Shenzhen, Guangdong 518129 (CN)
(72) Inventor: TANG, Xiaohu, Shenzhen, Guangdong 518129 (CN)
(74) Representative: Gill Jennings & Every LLP

(56) References cited:
- US-A1- 2009 300 759
- US-B1- 7 506 360
- CISCO: "Committed Access Rate", INTERNET CITATION, 1999, XP002375164, Retrieved from the Internet: URL:http://www.cisco.com/warp/public/732/T ech/car/ [retrieved on 2006-03-31]

## Description

### TECHNICAL FIELD

The present invention relates to the field of network technologies, and in particular, to a processing method and apparatus for preventing a packet attack.

### BACKGROUND

In an Ethernet network, a network device such as a network switch or a router screens, by using an access control list (English: access control list, ACL for short) in most circumstances, packets received by a port of the device to obtain a protocol packet, and sets a committed access rate (English: Committed Access Rate, CAR for short) for the obtained protocol packet to limit a rate at which the protocol packet is sent to a central processing unit (English: central processing unit, CPU for short), so as to prevent the CPU from receiving excessive packets.

To reduce hardware resources that are used to set the ACL and the CAR, the network device generally uses a same ACL for protocol packets of a same protocol type and that are received by the multiple ports, to perform a same CAR operation. However, if an unauthorized user sends a large quantity of protocol packets of a same protocol type to the network device through a port, which does not exchange a network protocol packet, of the network device, because the multiple ports use a same ACL and CAR, a port that exchanges a network protocol packet cannot process a normal protocol packet of the protocol type, and an effect similar to a denial-of-service (English: denial-of-service, DOS for short) attack is generated.

To avoid occurrence of the effect similar to a DOS attack, ports of the network device are generally configured to two types: a trusted port and an untrusted port. A port that does not exchange a network protocol packet is configured to an untrusted port, where the untrusted port does not receive a protocol packet. A port that exchanges a network protocol packet is configured to a trusted port, and a CAR at which a protocol packet is received is set for the trusted port. In this way, in a case in which the untrusted port is attacked, processing performed by the trusted port on a normal protocol packet is not affected.

Currently, manual configuration is required for configuring a trusted port and an untrusted port, which causes heavy workload, and may lead to an incorrect configuration.

US 2009/0300759 A1 discloses techniques for detecting and responding to attacks on computer and network systems including denial-of-service (DoS) attacks. A packet is classified as potentially being an attack packet if it matches an access control list (ACL) specifying one or more conditions.

US 7 506 360 B1 discloses a system and method for tracking communication for determining device states.

### SUMMARY

The present invention provide a processing method and apparatus for preventing a packet attack, to reduce incorrect configurations and achieve a relatively good effect for preventing a packet attack. The present invention is defined in the attached claims.

According to the processing method and apparatus for preventing a packet attack that are provided by the present invention, a port that succeeds in network protocol negotiation and a port that fails in network protocol negotiation can be determined by monitoring a network protocol negotiation status of a port; and the port that succeeds in network protocol negotiation is set to a trusted port, and the port that fails in network protocol negotiation is set to an untrusted port. Setting of the trusted port and the untrusted port can be completed without using a manner of manual configuration. Therefore, incorrect configurations caused by manual configuration can be reduced, configuration accuracy of the trusted port and the untrusted port can be improved, and a relatively good effect for preventing a packet attack can be achieved.

### BRIEF DESCRIPTION OF DRAWINGS

FIG. 1 is a first implementation flowchart of a processing method for preventing a packet attack according to an embodiment of the present invention;
FIG. 2 is a second implementation flowchart of a processing method for preventing a packet attack according to an embodiment of the present invention;
FIG. 3A and FIG. 3B are third implementation flowcharts of processing methods for preventing a packet attack according to embodiments of the present invention;
FIG. 4 is a schematic composition diagram of a processing apparatus for preventing a packet attack according to an embodiment of the present invention; and
FIG. 5 is a schematic composition diagram of a network device for preventing a packet attack according to an embodiment of the present invention.

### DESCRIPTION OF EMBODIMENTS

The following clearly describes the technical solutions in the embodiments of the present invention with reference to the accompanying drawings in the embodiments of the present invention.

A processing method for preventing a packet attack provided in the embodiments of the present invention is applicable to a first network device and a second network device that need to perform a process of network protocol negotiation, where the process of network protocol negotiation refers to a process in which a destination routing, a link status, and the like are determined by exchanging network protocol packets, and a network protocol may be a routing protocol, Bidirectional Forwarding Detection (English: Bidirectional Forwarding Detection, BFD for short), or the like.

The first network device and the second network device are network devices. The network devices may be a network switch, a router, a firewall, and the like. If a network device receives a large quantity of protocol packets through a port that does not exchange a network protocol packet, these protocol packets cannot undergo a network protocol negotiation process. Therefore, in the embodiments of the present invention, a port that succeeds in network protocol negotiation is set to a trusted port, and a port that fails in network protocol negotiation is set to an untrusted port, so that setting of the trusted port and the untrusted port can be completed without manual configuration.

Optionally, in the embodiments of the present invention, a protocol packet may be selected, according to a first ACL, from packets received by the trusted port, and a first CAR is set for the protocol packet, to limit, according to the first CAR, a rate at which the protocol packet is sent to a CPU. A protocol packet is selected, according to a second ACL, from packets received by the untrusted port, and a second CAR is set for the protocol packet, to limit, according to the second CAR, a rate at which the protocol packet is sent to the CPU. The first ACL is different from the second ACL. For example, a matching item in the first ACL includes a first port group, where the first port group includes port identifiers of all trusted ports; and a matching item in the second ACL includes a second port group, where the second port group includes port identifiers of all untrusted ports. The first CAR is different from the second CAR. For example, a value of the first CAR is greater than a value of the second CAR, which ensures that a protocol packet can be sent to the CPU normally. The value of the second CAR is less than the value of the first CAR, so that the trusted port can be prevented from being attacked in a case in which a large quantity of protocol packets are received by the untrusted port.

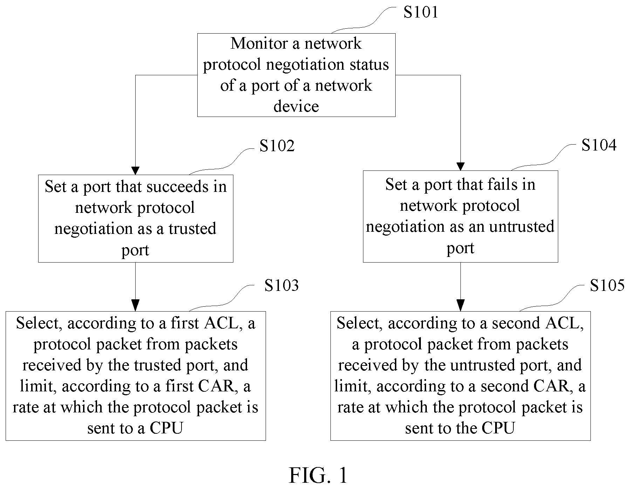

An embodiment of the present invention provides a processing method for preventing a packet attack. FIG. 1 shows a flowchart of the processing method for preventing a packet attack according to this embodiment of the present invention. As shown in FIG. 1, the processing method for preventing a packet attack provided by this embodiment of the present invention includes:
S101. A network device monitors a network protocol negotiation status of a port of the network device.

For communication between network devices, network protocol negotiation needs to be performed between ports of the two network devices that perform communication with each other. For example, for establishment of the Transmission Control Protocol (English: Transmission Control Protocol, TCP for short) connection, negotiation performed by means of a three-way handshake is required.

In this embodiment of the present invention, the port of the network device that performs communication may be a physical port or may be a logical port.

In this embodiment of the present invention, a CPU may monitor the network protocol negotiation status of the port of the network device and perform, according to a monitoring result of the CPU, a step of setting a trusted port or setting an untrusted port.

S102. The network device sets, according to the detected network protocol negotiation status of the port of the network device, a port that succeeds in network protocol negotiation to a trusted port.

S103. The network device selects, according to a first ACL, a protocol packet from packets received by the trusted port, and sets a first CAR for the protocol packet, to limit, according to the first CAR, a rate at which the protocol packet is sent to a CPU.

In this embodiment of the present invention, the network device may select, according to the first ACL, a protocol packet from the packets received by all trusted ports of the network device, and limit, according to the first CAR, a rate at which the protocol packet is sent to the CPU. In other words, all the trusted ports in this embodiment of the present invention use the same first ACL and the same first CAR.

S104. The network device sets, according to the detected network protocol negotiation status of the port of the network device, a port that fails in network protocol negotiation to an untrusted port.

S105. The network device selects, according to a second ACL, a protocol packet from packets received by the untrusted port, and sets a second CAR for the protocol packet, to limit, according to the second CAR, a rate at which the protocol packet is sent to the CPU.

In this embodiment of the present invention, the network device may select, according to the second ACL, a protocol packet from the packets received by all untrusted ports of the network device, and limit, according to the second CAR, a rate at which the protocol packet is sent to the CPU. In other words, all the untrusted ports in this embodiment of the present invention use the same second ACL and the same second CAR.

Generally, ports that exchange network protocol packets are required to perform network protocol negotiation to establish communication, and a port that does not exchange a network protocol packet is not required to perform network protocol negotiation. Therefore, in this embodiment of the present invention, a port that exchanges a network protocol packet and a port that does not exchange a network protocol packet are differentiated by monitoring a network protocol negotiation status of a port of a network device.

In the processing method for preventing a packet attack provided by this embodiment of the present invention, a network device can determine, by monitoring a network protocol negotiation status of a port, a port that succeeds in network protocol negotiation and a port that fails in network protocol negotiation; and the network device sets the port that succeeds in network protocol negotiation to a trusted port, and sets the port that fails in network protocol negotiation to an untrusted port. Setting of the trusted port and the untrusted port can be completed without manual configuration, which reduces incorrect configurations caused by manual configuration and improves configuration accuracy of the trusted port and the untrusted port. In addition, in this embodiment of the present invention, the network device selects, according to a first ACL, a protocol packet from packets received by the trusted port, and limits, according to a first CAR, a rate at which the protocol packet is sent to a CPU, where a value of the first CAR is greater than a value of a second CAR, which can ensure that the protocol packet can be sent to the CPU normally. The network device selects, according to a second ACL, a protocol packet from packets received by the untrusted port, and limits, according to the second CAR, a rate at which the protocol packet is sent to the CPU, where the first ACL is different from the second ACL, and the value of the second CAR is less than the value of the first CAR, which can ensure that processing performed by the trusted port on the protocol packet is not affected in a case in which a large quantity of protocol packets are received by the untrusted port.

In this embodiment of the present invention, according to the processing method for preventing a packet attack in which all trusted ports of the network device use the first ACL and the first CAR and all untrusted ports of the network device use the second ACL and the second CAR, fewer resources can be used to achieve an objective of preventing normal protocol packet processing performed by a trusted port from being affected when an untrusted port is attacked by a large quantity of protocol packets.

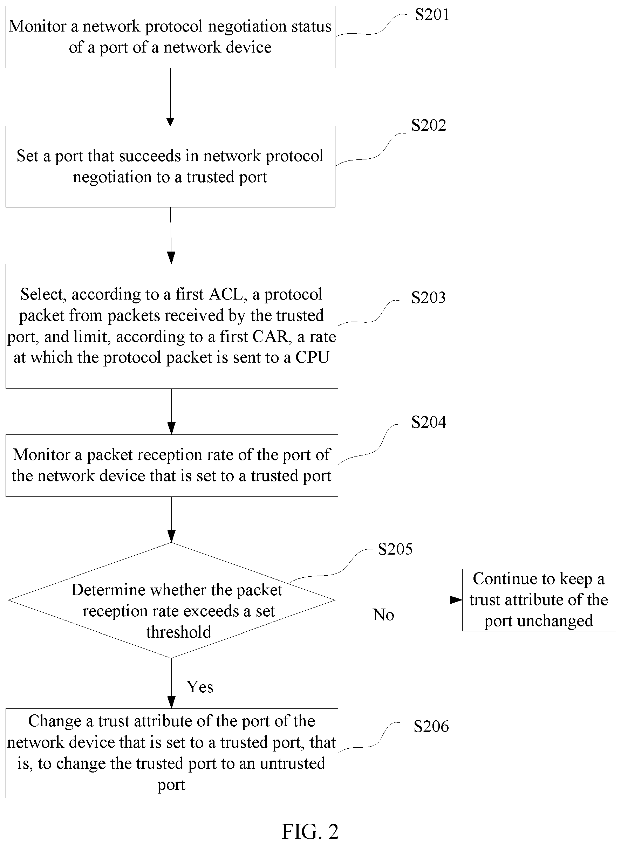

FIG. 2 shows another flowchart of a processing method for preventing a packet attack according to an embodiment of the present invention. As shown in FIG. 2, the processing method for preventing a packet attack provided by this embodiment of the present invention includes:
S201. A network device monitors a network protocol negotiation status of a port of the network device.
S202. The network device sets a port that succeeds in network protocol negotiation to a trusted port.
S203. The network device selects, according to a first ACL, a protocol packet from packets received by the trusted port, and limits, according to a first CAR, a rate at which the protocol packet is sent to a CPU.
S204. Monitor a packet reception rate of the port of the network device that is set to a trusted port.

Generally, after network devices succeed in network protocol negotiation, a protocol packet reception rate of a port of the network device should be less than a set threshold, where the set threshold is less than the first CAR and is generally a reference value defined by a standard or a specified reference value that is configured. Therefore, in this embodiment of the present invention, the packet reception rate of the trusted port may be monitored. Whether the port of the network device that is set to a trusted port is attacked by a large quantity of protocol packets is determined according to a monitoring result.

S205. Determine whether the packet reception rate of the port of the network device that is set to a trusted port exceeds a set threshold.

In this embodiment of the present invention, if the packet reception rate of the port of the network device that is set to a trusted port exceeds the set threshold, it may be considered that the port of the network device that is set to a trusted port is attacked by a large quantity of protocol packets, and a trust attribute of the port of the network device that is set to a trusted port may be changed. If the packet reception rate of the port of the network device that is set to a trusted port is less than the set threshold, a trust attribute of the port of the network device that is set to a trusted port continues to keep unchanged, a protocol packet is selected, according to the first ACL, from the packets received by the trusted port, and a rate at which the protocol packet is sent to the CPU is limited according to the first CAR.

S206. In a case in which the packet reception rate of the port of the network device that is set to a trusted port exceeds the threshold, change a trust attribute of the port of the network device that is set to a trusted port, to change the trusted port to an untrusted port; select, according to a second ACL, a protocol packet from packets received by the untrusted port; and limit, according to a second CAR, a rate at which the protocol packet is sent to the CPU.

In this embodiment of the present invention, a matching item in the first ACL includes a first port group, where the first port group includes port identifiers of all trusted ports. A matching item in the second ACL includes a second port group, where the second port group includes port identifiers of all untrusted ports. To change a port of the network device from a trusted port to an untrusted port, the following may be performed: removing a port identifier of the port of the network device from the first port group and adding the port identifier of the port of the network device to the second port group.

In this embodiment of the present invention, after the port that succeeds in network protocol negotiation is set to a trusted port, the packet reception rate of the port of the network device that is set to a trusted port is further monitored. In a case in which a port of the network device is configured to a trusted port and a packet reception rate of the port of the network device that is configured to a trusted port exceeds a threshold, a trust attribute of the port of the network device that is set to a trusted port is changed, to change the trusted port to an untrusted port; a protocol packet is selected, according to the second ACL, from packets received by the untrusted port; and a rate at which the protocol packet is sent to the CPU is limited according to the second CAR. In this way, processing performed by another trusted port on a normal protocol packet can be prevented from being affected when excessive protocol packets are received by the port of the network device that is set to a trusted port.

In this embodiment of the present invention, after the trusted port is changed to an untrusted port, a packet reception rate of the port of the network device that is changed to an untrusted port may be further monitored in a set period of time. If the packet reception rate continues to be less than a set threshold in the set period of time, the port of the network device that is changed to an untrusted port may be restored to a trusted port; a protocol packet is selected, according to the first ACL, from packets received by the trusted port; and a rate at which the protocol packet is sent to the CPU is limited according to the first CAR, which ensures that the protocol packet is processed normally.

In this embodiment of the present invention, the matching item in the first ACL includes the first port group, where the first port group includes the port identifiers of all the trusted ports. The matching item in the second ACL includes the second port group, where the second port group includes the port identifiers of all the untrusted ports. When a port of the network device is changed from an untrusted port to a trusted port, the network device removes a port identifier of the port of the network device from the second port group and adds the port identifier of the port of the network device to the first port group.

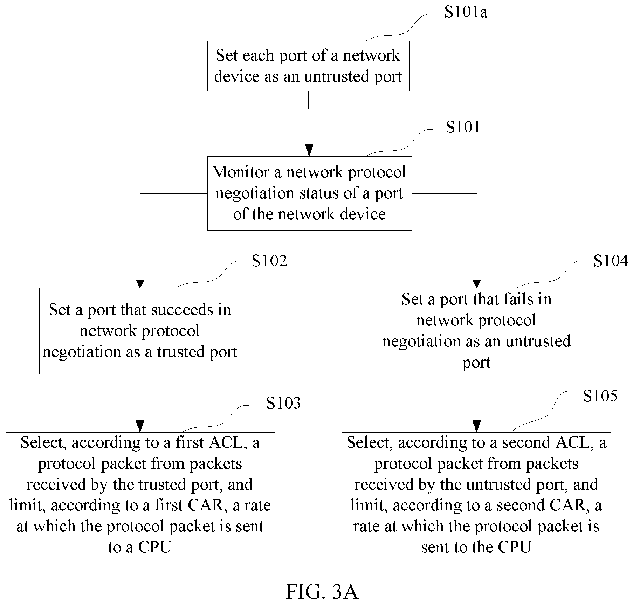

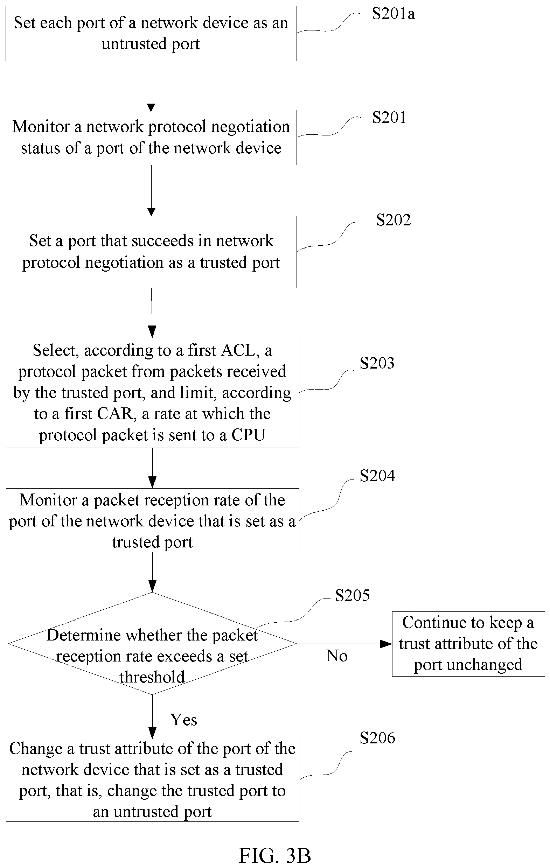

FIG. 3A and FIG. 3B show still another two flowcharts of processing methods for preventing a packet attack according to embodiments of the present invention.

On the basis of the method shown in FIG. 1, the processing method for preventing a packet attack shown in FIG. 3A further includes:
S101a. Set each port of a network device to an untrusted port.

On the basis of the method shown in FIG. 2, the processing method for preventing a packet attack shown in FIG. 3B further includes:
S201a. Set each port of a network device to an untrusted port.

In the processing methods for preventing a packet attack shown in FIG. 3A and FIG. 3B according to this embodiment of the present invention, each port of the network device is initially set to an untrusted port. The network device selects, according to a second ACL, a protocol packet from packets received by the untrusted port set initially; and sets a second CAR for the protocol packet, to limit, according to the second CAR, a rate at which the protocol packet is sent to a CPU. After it is detected that a port of the network device succeeds in network protocol negotiation, the port that succeeds in network protocol negotiation is set to a trusted port, and for a port that fails in network protocol negotiation, an original trust attribute of an untrusted port continues to keep unchanged, which can ensure that normal processing performed by the trusted port on a protocol packet is not affected when excessive protocol packets are received by another port.

It should be noted that a method for configuring a trusted port and an untrusted port in the processing methods for preventing a packet attack provided by the embodiments of the present invention is applicable to any network architecture in which network protocol negotiation occurs, and is not limited to the examples used in the foregoing embodiments. For example, the processing methods for preventing a packet attack provided by the embodiments of the present invention is further applicable to a Bidirectional Forwarding Detection (English: Bidirectional Forwarding Detection, BFD for short) scenario, to implement automatic configuration of a trusted port and an untrusted port and implement automatic switch between a trusted port and a untrusted port, thereby preventing a protocol packet attack dynamically.

It should be further noted that reference numerals of all steps involved in the embodiments of the present invention are used only for ease of description, and do not limit an execution sequence of all the steps. For example, step S102 and step S104 in FIG. 1 are not sequentially performed.

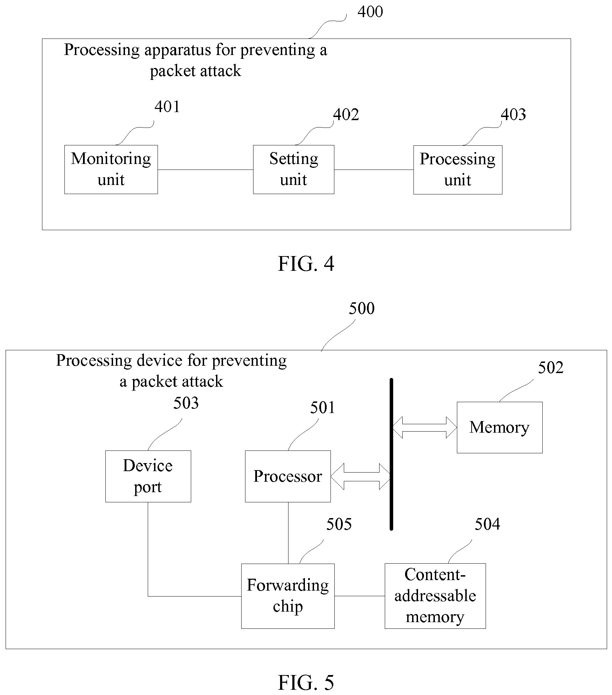

On the basis of the processing methods for preventing a packet attack provided by the foregoing embodiments, an embodiment of the present invention further provides a processing apparatus 400 for preventing a packet attack. As shown in FIG. 4, the processing apparatus 400 for preventing a packet attack provided by this embodiment of the present invention includes a monitoring unit 401, a setting unit 402, and a processing unit 403, where
the monitoring unit 401 is configured to monitor a network protocol negotiation status of a port of a network device;
the setting unit 402 is configured to set, to a trusted port, a port that succeeds in network protocol negotiation and is detected by the monitoring unit 401; and set, to an untrusted port, a port that fails in network protocol negotiation and is detected by the monitoring unit 401; and
the processing unit 403 is configured to select, according to a first ACL, a protocol packet from packets received by the trusted port set by the setting unit 402; limit, according to a first CAR, a rate at which the protocol packet is sent to a CPU; select, according to a second ACL, a protocol packet from packets received by the untrusted port set by the setting unit 402; and limit, according to a second CAR, a rate at which the protocol packet is sent to the CPU.

In a first implementation manner, the monitoring unit 401 is further configured to:
after the setting unit 402 sets the port that succeeds in network protocol negotiation to a trusted port, monitor a packet reception rate of the trusted port.

The setting unit 402 is further configured to:
change the trusted port to an untrusted port in a case in which the monitoring unit 401 detects that the packet reception rate of the trusted port exceeds a threshold.

The processing unit 403 is further configured to:
select, according to the second ACL, a protocol packet from packets received by the untrusted port obtained by changing by the setting unit 402; and limit, according to the second CAR, a rate at which the protocol packet is sent to the central processing unit.

In a second implementation manner, the first ACL is the same as a first ACL used by another trusted port except the trusted port, and the first CAR is the same as a first CAR used by another trusted port except the trusted port.

In a third implementation manner, the second ACL is the same as a second ACL used by another untrusted port except the untrusted port, and the second CAR is the same as a second CAR used by another untrusted port except the untrusted port.

In a fourth implementation manner, the setting unit 402 is further configured to:
before the monitoring unit 401 monitors the network protocol negotiation status of the port of the network device, set each port of the network device to an untrusted port.

The processing apparatus 400 for preventing a packet attack provided by this embodiment of the present invention may be a network device that performs network protocol negotiation. For example, the network device may be a network switch, a router, or the like, which is not limited in this embodiment of the present invention.

The processing apparatus 400 for preventing a packet attack provided by this embodiment of the present invention can determine, by monitoring a network protocol negotiation status of a port, a port that succeeds in network protocol negotiation and a port that fails in network protocol negotiation; and set the port that succeeds in network protocol negotiation to a trusted port, and set the port that fails in network protocol negotiation to an untrusted port. Setting of the trusted port and the untrusted port can be completed without using a manner of manual configuration. Therefore, incorrect configurations caused by manual configuration can be reduced, configuration accuracy of the trusted port and the untrusted port can be improved, and a relatively good effect for preventing a packet attack can be achieved by receiving protocol packets at the trusted port and the untrusted port by using different resources.

On the basis of the processing method and apparatus for preventing a packet attack provided by the foregoing embodiments, an embodiment of the present invention further provides a network device 500 for preventing a packet attack. As shown in FIG. 5, the network device 500 for preventing a packet attack provided by this embodiment of the present invention includes a processor 501, a memory 502, a device port 503, a content-addressable memory (English: content-addressable memory, CAM for short) 504, and a forwarding chip 505. Both the forwarding chip 505 and the memory 502 are connected to the processor 501, the forwarding chip 505 is connected to the CAM 504, and the forwarding chip 505 is connected to the device port 503. A specific medium for connecting the foregoing components is not limited in this embodiment of the present invention. In FIG. 5 of this embodiment of the present invention, the memory 502 and the processor 501 are connected by using a bus, where in FIG. 5, the bus is represented by a bold line; a manner of connecting other components is only exemplarily described and is not limited. For example, the forwarding chip 505 and the processor 501 may be connected by a bus.

The forwarding chip 505 in this embodiment of the present invention may be a network processor (English: network processor, NP for short), an application-specific integrated circuit (English: application-specific integrated circuit, ASIC for short), a programmable logic device (English: programmable logic device, PLD for short), or a combination thereof. The PLD may be a complex programmable logic device (English: complex programmable logic device, CPLD for short), a field-programmable gate array (English: field-programmable gate array, FPGA for short), a generic array logic (English: generic array logic, GAL for short), or a combination thereof. The forwarding chip 505 in this embodiment of the present invention may set a CAR for a protocol packet to limit a rate at which the protocol packet is sent to the processor 501, so as to prevent the processor 501 from receiving excessive protocol packets.

The CAM 504 in this embodiment of the present invention may be, for example, a ternary CAM (English: ternary CAM, TCAM for short). The CAM 504 in this embodiment of the present invention stores an ACL, which is used to perform selection on packets received by the device port 503 to obtain a protocol packet.

The device port 503 in this embodiment of the present invention communicates with another device or a communications network by using an apparatus such as a transceiver. The device port 503 in this embodiment of the present invention is configured to receive and send a packet.

The memory 502 in this embodiment of the present invention is configured to store program code executed by the processor 501, and may be a read-only memory (English: read-only memory, ROM for short), or a random access memory (English: random access memory, RAM for short), or may be an electrically erasable programmable read-only memory (English: Electrically Erasable Programmable Read-Only Memory, EEPROM for short), a disk storage medium or another magnetic storage device, or any other medium, which can be used to carry or store expected program code which is in a form of an instruction or a data structure, and which can be accessed by a computer, but is not limited thereto. For example, the memory 502 may be a combination of the foregoing memories.

The processor 501 in this embodiment of the present invention may be a general-purpose CPU.

In this embodiment of the present invention, the network device 500 for preventing a packet attack implements a communication connection to at least one another communication network element by using at least one device port 503, to receive and send a packet, and perform network protocol negotiation with a device port of another communication network element. The CAM 504 selects, according to the stored ACL, a protocol packet from packets received by the device port 503. For example, the CAM 504 may select, as the protocol packet, a packet that matches a port identifier that are in a port group and a protocol type included in matching items in the ACL. The forwarding chip 505 sets a CAR for the protocol packet selected by the CAM 504, to limit a rate at which the protocol packet is sent to the processor 501.

The processor 501 may invoke the program code stored by the memory 502 and perform the following operations according to the program code:
monitoring a network protocol negotiation status of the device port 503;
instructing the forwarding chip 505 to set, in the CAM 504, a matching item, which matches the device port 503 that succeeds in network protocol negotiation, in a first ACL, so as to set the device port 503 that succeeds in network protocol negotiation to a trusted port and select a protocol packet at the trusted port according to the first ACL;
and instructing the forwarding chip 505 to set, in the CAM 504, a matching item, which matches the device port 503that fails in network protocol negotiation, in a second ACL, so as to set the device port 503 that fails in network protocol negotiation to an untrusted port and select a protocol packet at the untrusted port according to the second ACL.

The first ACL set in the CAM 504 in this embodiment of the present invention is the same as a first ACL used by another trusted port except the trusted port that is set currently. The second ACL set in the CAM 504 is the same as a second ACL used by another untrusted port except the untrusted port that is set currently.

The forwarding chip 505 may set a first CAR for the protocol packet selected at the trusted port, to limit, according to the first CAR, a rate at which the protocol packet selected at the trusted port is sent to the processor 501. The forwarding chip 505 sets a second CAR for the protocol packet selected at the untrusted port, to limit, according to the second CAR, a rate at which the protocol packet selected at the untrusted port is sent to the processor 501.

The first CAR set by the forwarding chip 505 in this embodiment of the present invention is the same as a first CAR used by another trusted port except the trusted port that is set currently. The second CAR set by the forwarding chip 505 is the same as a second CAR used by another untrusted port except the untrusted port that is set currently.

In a first implementation manner, the processor 501 is further configured to:
after the device port 503 that succeeds in network protocol negotiation is set to a trusted port in the CAM 504, monitor a packet reception rate of the trusted port; and
in a case in which the processor 501 detects that the packet reception rate of the device port 503 that is set to a trusted port exceeds a threshold, instruct the forwarding chip 505 to change, in the CAM 504, the device port 503 that is set to a trusted port to an untrusted port.

In a second implementation manner, the processor 501 is further configured to:
before the processor 501 monitors the network protocol negotiation status of the device port 503 of the network device, instruct the forwarding chip 505 to set, in the CAM 504, each device port 503 of the network device to an untrusted port.

The network device 500 for preventing a packet attack provided by this embodiment of the present invention may be a network device that performs network protocol negotiation. For example, the network device may be a network switch, a router, or the like, which is not limited in this embodiment of the present invention.

The network device 500 for preventing a packet attack provided by this embodiment of the present invention can determine, by monitoring a network protocol negotiation status of a port, a port that succeeds in network protocol negotiation and a port that fails in network protocol negotiation; and set the port that succeeds in network protocol negotiation to a trusted port, and set the port that fails in network protocol negotiation to an untrusted port. Setting of the trusted port and the untrusted port can be completed without using a manner of manual configuration. Therefore, incorrect configurations caused by manual configuration can be reduced, configuration accuracy of the trusted port and the untrusted port can be improved, and a relatively good effect for preventing a packet attack can be achieved by receiving protocol packets at the trusted port and the untrusted port by using different resources.

The processing apparatus 400 for preventing a packet attack and the network device 500 for preventing a packet attack that are provided by the embodiments of the present invention can be configured to execute the processing methods for preventing a packet attack that are involved in the embodiments of the present invention. Therefore, for a part that is not described in detail and about the processing apparatus 400 for preventing a packet attack and the network device 500 for preventing a packet attack in the embodiments of the present invention, reference may be made to description of the related methods and accompanying drawings thereof, and details are not described herein again.

The foregoing descriptions are merely exemplary implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A processing method for preventing a packet attack, comprising:
monitoring (101) a network protocol negotiation status of a port of a network device;
setting (102), according to the detected network protocol negotiation status of the port of the network device, a port that succeeds in network protocol negotiation to a trusted port;
selecting (103), according to a first access control list, a protocol packet from packets received by the trusted port, and limiting, according to a first committed access rate, a rate at which the protocol packet is sent to a central processing unit;
setting (104), according to the detected network protocol negotiation status of the port of the network device, a port that fails in network protocol negotiation to an untrusted port; and
selecting (105), according to a second access control list, a protocol packet from packets received by the untrusted port, and limiting, according to a second committed access rate, a rate at which the protocol packet is sent to the central processing unit, wherein a value of the first committed access rate is greater than a value of the second committed access rate.

2. The method according to claim 1, wherein after the setting a port that succeeds in network protocol negotiation to a trusted port, the method further comprises:
monitoring (204) a packet reception rate of the trusted port; and
changing (206) the trusted port to an untrusted port in a case in which the packet reception rate exceeds a threshold.

3. The method according to claim 1 or 2, wherein the first access control list is the same as a first access control list used by another trusted port except the trusted port; and
the first committed access rate is the same as a first committed access rate used by another trusted port except the trusted port.

4. The method according to any one of claims 1 to 3, wherein the second access control list is the same as a second access control list used by another untrusted port except the untrusted port; and
the second committed access rate is the same as a second committed access rate used by another untrusted port except the untrusted port.

5. The method according to any one of claims 1 to 4, wherein before the monitoring a network protocol negotiation status of a port of a network device, the method further comprises:
setting (201a) each port of the network device to an untrusted port.

6. A processing apparatus for preventing a packet attack, comprising:
a monitoring unit (401), configured to monitor a network protocol negotiation status of a port of a network device;
a setting unit (402), configured to set, to a trusted port, a port that succeeds in network protocol negotiation and is detected by the monitoring unit; and set, to an untrusted port, a port that fails in network protocol negotiation and is detected by the monitoring unit; and
a processing unit (403), configured to select, according to a first access control list, a protocol packet from packets received by the trusted port set by the setting unit; limit, according to a first committed access rate, a rate at which the protocol packet is sent to a central processing unit; select, according to a second access control list, a protocol packet from packets received by the untrusted port set by the setting unit; and limit, according to a second committed access rate, a rate at which the protocol packet is sent to the central processing unit, wherein a value of the first committed access rate is greater than a value of the second committed access rate.

7. The processing apparatus according to claim 6, wherein the monitoring unit is further configured to:
after the setting unit sets the port that succeeds in network protocol negotiation to a trusted port, monitor a packet reception rate of the trusted port; and
the setting unit is further configured to:
change the trusted port to an untrusted port in a case in which the monitoring unit detects that the packet reception rate of the trusted port exceeds a threshold.

8. The processing apparatus according to claim 6 or 7, wherein the first access control list is the same as a first access control list used by another trusted port except the trusted port; and
the first committed access rate is the same as a first committed access rate used by another trusted port except the trusted port.

9. The processing apparatus according to any one of claims 6 to 8, wherein the second access control list is the same as a second access control list used by another untrusted port except the untrusted port; and
the second committed access rate is the same as a second committed access rate used by another untrusted port except the untrusted port.

10. The processing apparatus according to any one of claims 6 to 9, wherein the setting unit is further configured to:
before the monitoring unit monitors the network protocol negotiation status of the port of the network device, set each port of the network device to an untrusted port.

## Patentansprüche

1. Verarbeitungsverfahren zum Verhindern eines Paketangriffs, das die folgenden Schritte umfasst:
Überwachen (101) eines Netzwerkprotokollverhandlungsstatus eines Ports einer Netzwerkvorrichtung;
Einstellen (102), gemäß dem detektierten Netzwerkprotokollverhandlungsstatus des Ports der Netzwerkvorrichtung, eines Ports, der bei Netzwerkprotokollverhandlung erfolgreich ist, auf einen vertrauenswürdigen Port;
Auswählen (103), gemäß einer ersten Zugangssteuerungsliste, eines Protokollpakets aus von dem vertrauenswürdigen Port empfangenen Paketen und Beschränken, gemäß einer ersten zugesicherten Zugangsrate, einer Rate, mit der das Protokollpaket an eine zentrale Verarbeitungseinheit gesendet wird;
Einstellen (104), gemäß dem detektierten Netzwerkprotokollverhandlungsstatus des Ports der Netzwerkvorrichtung, eines Ports, der bei Netzwerkprotokollverhandlung durchfällt, auf einen nicht vertrauenswürdigen Port; und
Auswählen (105), gemäß einer zweiten Zugangssteuerungsliste, eines Protokollpakets aus von dem nicht vertrauenswürdigen Port empfangenen Paketen und Beschränken, gemäß einer zweiten zugesicherten Zugangsrate, einer Rate, mit der das Protokollpaket an eine zentrale Verarbeitungseinheit gesendet wird, wobei ein Wert der ersten zugesicherten Zugangsrate größer als ein Wert der zweiten zugesicherten Zugangsrate ist.

2. Verfahren nach Anspruch 1, wobei das Verfahren nach dem Einstellen eines Ports, der bei Netzwerkprotokollverhandlung erfolgreich ist, auf einen vertrauenswürdigen Port die folgenden Schritte umfasst:
Überwachen (204) einer Paketempfangsrate des vertrauenswürdigen Ports; und
Ändern (206) des vertrauenswürdigen Ports auf einen nicht vertrauenswürdigen Port für einen Fall, bei dem die Paketempfangsrate eine Schwelle überschreitet.

3. Verfahren nach Anspruch 1 oder 2, wobei die erste Zugangssteuerungsliste dieselbe wie eine erste Zugangssteuerungsliste ist, die durch einen anderen vertrauenswürdigen Port außer dem vertrauenswürdigen Port verwendet wird; und die erste zugesicherte Zugangsrate dieselbe wie eine erste zugesicherte Zugangsrate ist, die von einem anderen vertrauenswürdigen Port außer dem vertrauenswürdigen Port verwendet wird.

4. Verfahren nach einem der Ansprüche 1 bis 3, wobei die zweite Zugangssteuerungsliste dieselbe wie eine zweite Zugangssteuerungsliste ist, die durch einen anderen nicht vertrauenswürdigen Port außer dem nicht vertrauenswürdigen Port verwendet wird; und
die zweite zugesicherte Zugangsrate dieselbe wie eine zweite zugesicherte Zugangsrate ist, die von einem anderen nicht vertrauenswürdigen Port außer dem nicht vertrauenswürdigen Port verwendet wird.

5. Verfahren nach einem der Ansprüche 1 bis 4, wobei das Verfahren vor dem Überwachen eines Netzwerkprotokollverhandlungsstatus eines Ports einer Netzwerkvorrichtung ferner den folgenden Schritt umfasst:
Einstellen (201a) jedes Ports der Netzwerkvorrichtung auf einen nicht vertrauenswürdigen Port.

6. Verarbeitungseinrichtung zum Verhindern eines Paketangriffs, die Folgendes umfasst:
eine Überwachungseinheit (401), die ausgelegt ist zum Überwachen eines Netzwerkprotokollverhandlungsstatus eines Ports einer Netzwerkvorrichtung;
eine Einstelleinheit (402), die ausgelegt ist zum Einstellen, auf einen vertrauenswürdigen Port, eines Ports, der bei Netzwerkprotokollverhandlung erfolgreich ist und von der Überwachungseinheit detektiert wurde; und zum Einstellen, auf einen nicht vertrauenswürdigen Port, eines Ports, der bei Netzwerkprotokollverhandlung durchfällt und von der Überwachungseinheit detektiert wurde; und
eine Verarbeitungseinheit (403), die ausgelegt ist zum Auswählen, gemäß einer ersten Zugangssteuerungsliste, eines Protokollpakets aus von dem von der Einstelleinheit eingestellten vertrauenswürdigen Port empfangenen Paketen; zum Beschränken, gemäß einer ersten zugesicherten Zugangsrate, einer Rate, mit der das Protokollpaket an eine zentrale Verarbeitungseinheit gesendet wird; zum Auswählen, gemäß einer zweiten Zugangssteuerungsliste, eines Protokollpakets aus von dem von der Einstelleinheit eingestellten nicht vertrauenswürdigen Port empfangenen Paketen und zum Beschränken, gemäß einer zweiten zugesicherten Zugangsrate, einer Rate, mit der das Protokollpaket an die zentrale Verarbeitungseinheit gesendet wird, wobei ein Wert der ersten zugesicherten Zugangsrate größer als ein Wert der zweiten zugesicherten Zugangsrate ist.

7. Verarbeitungseinrichtung nach Anspruch 6, wobei die Überwachungseinheit ferner ausgelegt ist zum:
nachdem die Einstelleinheit den Port, der bei Netzwerkprotokollverhandlung erfolgreich ist, auf einen vertrauenswürdigen Port eingestellt hat, Überwachen einer Paketempfangsrate des vertrauenswürdigen Ports; und
die Einstelleinheit ferner ausgelegt ist zum:
Ändern des vertrauenswürdigen Ports auf einen nicht vertrauenswürdigen Port für einen Fall, bei dem die Überwachungseinheit detektiert, dass die Paketempfangsrate des vertrauenswürdigen Ports eine Schwelle überschreitet.

8. Verarbeitungseinrichtung nach Anspruch 6 oder 7, wobei die erste Zugangssteuerungsliste dieselbe wie eine erste Zugangssteuerungsliste ist, die durch einen anderen vertrauenswürdigen Port außer dem vertrauenswürdigen Port verwendet wird; und
die erste zugesicherte Zugangsrate dieselbe wie eine erste zugesicherte Zugangsrate ist, die von einem anderen vertrauenswürdigen Port außer dem vertrauenswürdigen Port verwendet wird.

9. Verarbeitungseinrichtung nach einem der Ansprüche 6 bis 8, wobei die zweite Zugangssteuerungsliste dieselbe wie eine zweite Zugangssteuerungsliste ist, die durch einen anderen nicht vertrauenswürdigen Port außer dem nicht vertrauenswürdigen Port verwendet wird; und
die zweite zugesicherte Zugangsrate dieselbe wie eine zweite zugesicherte Zugangsrate ist, die von einem anderen nicht vertrauenswürdigen Port außer dem nicht vertrauenswürdigen Port verwendet wird.

10. Verarbeitungseinrichtung nach einem der Ansprüche 6 bis 9, wobei die Einstelleinheit ferner ausgelegt ist zum:
bevor die Überwachungseinheit den Netzwerkprotokollverhandlungsstatus des Ports der Netzwerkvorrichtung überwacht, Einstellen jedes Ports der Netzwerkvorrichtung auf einen nicht vertrauenswürdigen Port.

## Revendications

1. Procédé de traitement pour prévenir une attaque par paquets, comprenant les étapes suivantes :
surveiller (101) un état de négociation de protocole de réseau d'un port d'un dispositif de réseau ;
définir (102), en fonction de l'état de négociation de protocole de réseau détecté du port du dispositif de réseau, un port qui réussit la négociation de protocole de réseau comme étant un port de confiance ;
sélectionner (103), en fonction d'une première liste de contrôle d'accès, un paquet de protocole parmi des paquets reçus par le port de confiance, et limiter, en fonction d'une première vitesse d'accès engagée, une vitesse à laquelle le paquet de protocole est envoyé à une unité centrale de traitement ;
définir (104), en fonction de l'état de négociation de protocole de réseau détecté du port du dispositif de réseau, un port qui échoue dans la négociation de protocole de réseau comme étant un port non fiable ; et
sélectionner (105), en fonction d'une seconde liste de contrôle d'accès, un paquet de protocole parmi des paquets reçus par le port non fiable, et limiter, en fonction d'une seconde vitesse d'accès engagée, une vitesse à laquelle le paquet de protocole est envoyé à l'unité centrale de traitement, où une valeur de la première vitesse d'accès engagée est supérieure à une valeur de la seconde vitesse d'accès engagée.

2. Procédé selon la revendication 1, dans lequel, après la définition d'un port qui réussit une négociation de protocole de réseau comme étant un port de confiance, le procédé comprend en outre les étapes suivantes :
surveiller (204) une vitesse de réception de paquets du port de confiance ; et
changer (206) le port de confiance en port non fiable dans le cas où la vitesse de réception de paquets dépasse un seuil.

3. Procédé selon la revendication 1 ou la revendication 2, dans lequel la première liste de contrôle d'accès est la même qu'une première liste de contrôle d'accès utilisée par un autre port de confiance, à l'exception du port de confiance ; et
la première vitesse d'accès engagée est la même qu'une première vitesse d'accès engagée utilisée par un autre port de confiance, à l'exception du port de confiance.

4. Procédé selon l'une quelconque des revendications 1 à 3, dans lequel la seconde liste de contrôle d'accès est la même qu'une seconde liste de contrôle d'accès utilisée par un autre port non fiable, à l'exception du port non fiable ; et
la seconde vitesse d'accès engagée est la même qu'une seconde vitesse d'accès engagée utilisée par un autre port non fiable, à l'exception du port non fiable.

5. Procédé selon l'une quelconque des revendications 1 à 4, dans lequel, avant la surveillance d'un état de négociation de protocole de réseau d'un port d'un dispositif de réseau, le procédé comprend en outre l'étape suivante :
définir (201a) chaque port du dispositif de réseau comme étant un port non fiable.

6. Appareil de traitement pour empêcher une attaque par paquets, comprenant :
une unité de surveillance (401), configurée pour surveiller un état de négociation de protocole de réseau d'un port d'un dispositif de réseau ;
une unité de définition (402), configurée pour définir, comme étant un port de confiance, un port qui réussit une négociation de protocole de réseau et est détecté par l'unité de surveillance ; et définir, comme étant un port non fiable, un port qui ne réussit pas une négociation de protocole de réseau et est détecté par l'unité de surveillance ; et
une unité de traitement (403), configurée pour sélectionner, en fonction d'une première liste de contrôle d'accès, un paquet de protocole parmi des paquets reçus par le port de confiance défini par l'unité de définition ; limiter, en fonction d'une première vitesse d'accès engagée, une vitesse à laquelle le paquet de protocole est envoyé à une unité centrale de traitement ; sélectionner, en fonction d'une seconde liste de contrôle d'accès, un paquet de protocole parmi des paquets reçus par le port non fiable défini par l'unité de définition ; et limiter, en fonction d'une seconde vitesse d'accès engagée, une vitesse à laquelle le paquet de protocole est envoyé à l'unité centrale de traitement, où une valeur de la première vitesse d'accès engagée est supérieure à une valeur de la seconde vitesse d'accès engagée.

7. Appareil de traitement selon la revendication 6, dans lequel l'unité de surveillance est en outre configurée pour :
après que l'unité de définition a défini le port qui réussit la négociation de protocole de réseau comme étant un port de confiance, surveiller une vitesse de réception de paquets du port de confiance ; et
l'unité de définition est en outre configurée pour :
changer le port de confiance en un port non fiable dans le cas où l'unité de surveillance détecte que la vitesse de réception de paquets du port de confiance dépasse un seuil.

8. Appareil de traitement selon la revendication 6 ou la revendication 7, dans lequel la première liste de contrôle d'accès est la même qu'une première liste de contrôle d'accès utilisée par un autre port de confiance, à l'exception du port de confiance ; et la première vitesse d'accès engagée est la même qu'une première vitesse d'accès engagée utilisée par un autre port de confiance, à l'exception du port de confiance.

9. Appareil de traitement selon l'une quelconque des revendications 6 à 8, dans lequel la seconde liste de contrôle d'accès est la même qu'une seconde liste de contrôle d'accès utilisée par un autre port non fiable, à l'exception du port non fiable ; et
la seconde vitesse d'accès engagée est la même qu'une seconde vitesse d'accès engagée utilisée par un autre port non fiable, à l'exception du port non fiable.

10. Appareil de traitement selon l'une quelconque des revendications 6 à 9, dans lequel l'unité de définition est en outre configurée pour :
avant que l'unité de surveillance surveille l'état de négociation de protocole réseau du port du dispositif de réseau, définir chaque port du dispositif de réseau comme étant un port non fiable.
